# EUROPEAN PATENT SPECIFICATION

(11) **EP 1 582 855 B1**
(45) Date of publication and mention of the grant of the patent: **17.12.2008**
(21) Application number: 05006913.7
(22) Date of filing: 30.03.2005
(51) Int. Cl.: G01N 1/40, G01N 23/223

(54) **Concentration method of liquid specimen and trace element analysis method using same**
Verfahren zur Konzentration einer flüssigen Probe und Verfahren zur Spurenelementanalyse unter Verwendung dieses Verfahrens
Méthode de concentration d'un échantillon liquide et méthode d'analyse de traces d'éléments utilisant cette méthode.

(30) Priority: 31.03.2004 JP 2004105109
(43) Date of publication of application: 05.10.2005
(73) Proprietor: HORIBA, LTD., Kyoto (JP)
(72) Inventor: Uchihara, Hiroshi, Minami-ku, Kyoto (JP); Ikeda, Masahiko, Minami-ku, Kyoto (JP); Bando, Atsushi, Minami-ku, Kyoto (JP)
(74) Representative: Müller - Hoffmann & Partner

(56) References cited:
- DE-A1- 10 043 042
- US-A- 5 323 441
- US-A- 5 544 218
- US-A- 5 734 587
- US-A- 5 958 345
- US-B1- 6 555 813
- PATENT ABSTRACTS OF JAPAN vol. 018, no. 125 (P-1701), 28 February 1994 (1994-02-28) & JP 05 312698 A (NIPPON TELEGR & TELEPH CORP <NTT>; others: 01), 22 November 1993 (1993-11-22)
- GRIENE VAN R ET AL: "ENRICHMENT PROCEDURES FOR WATER ANALYSIS BY X-RAY ENERGY SPECTROMETRY" PROCEEDINGS OF THE ANNUAL CONFERENCE ON APPLICATIONS OF X-RAY ANALYSIS, XX, XX, 1976, pages 435-447, XP008062535

## Description

### BACKGROUND OF THE INVENTION

### Field of the Invention

The present invention relates to a technique capable of concentrating a liquid specimen to realize a high sensitivity analysis for a trace element in analysis of the trace element contained in the liquid specimen by an element analyzer having an irradiation source with energy of 1.24 eV or higher such as X-rays, laser beams or the like, including a fluorescent X-ray analysis method, a laser ablation/inductively coupled plasma mass spectrometry and the like.

### Description of the Prior Art

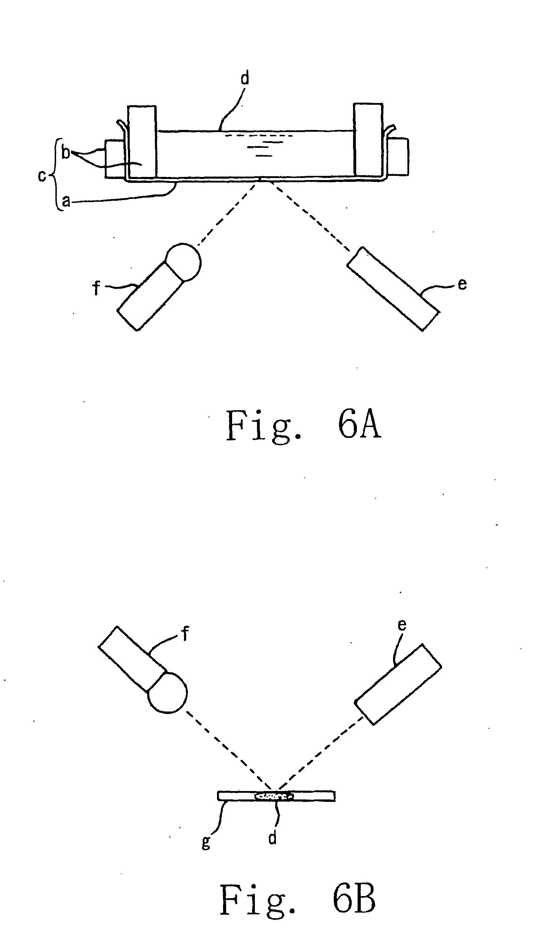

An element analysis in a liquid specimen with a fluorescent X-ray analysis method, for example, has generally been conducted according to the following two methods; in one of which, as shown in Fig. 6(A), a specimen d is put in a vessel c dedicated to a liquid and constructed with a PET (polyethylene terephthalate) film a and a member b supporting the PET film in a state being stretched over an opening thereof and the specimen d is irradiated with X-rays from X-ray generating tube e through the lower surface of the vessel c to measure a fluorescent X-ray liberated from the specimen d in the vessel c with an X-ray detector f; and in the other of which, as shown in Fig. 6(B), a liquid specimen is dropped onto a filter paper g, the dropped specimen is dried and thereafter the dried specimen d with which the filter paper g is impregnated is irradiated with X-rays to measure a fluorescent X-ray liberated from the specimen d.

In the former case, however, sufficient sensitivity cannot be obtained when a specimen concentration is low and in the latter case, scattering of X-rays (an influence of the background due to scattered X-rays) is caused by a material of the filter paper g to a great extent and the specimen d does not extend uniformly in the filter paper with local segregation, which causing a fluctuation in determined values.

Therefore, proposals have been made on a holding film for a specimen used in a fluorescent X-ray analysis method or the like by JP-A No. 3063934 including that employed is an organic thin film much thinner than a PET film of the smallest thickness of the order in the range of from 1 to 3 *µ* m available on the market, to which a PET film is limited for reasons in fabrication, a fabrication method for an organic thin film, and that a liquid specimen is dropped onto the organic thin film and left so as to extend, and then the specimen layer is evaporated to dryness, which is used as an analysis specimen.

According to this method, a film thickness of the organic thin film holding the specimen is small, thereby enabling scattered X-rays serving as the background to be reduced.

The organic thin film, however, is not water repellent and when a liquid specimen is dropped onto the organic thin film, a water droplet of the liquid specimen is immediately widely spread over the surface of the thin film therealong with smoothness in a thin manner while keeping a circular outer periphery. Therefore, after the solvent is evaporated, a trace element (a component to be analyzed) contained in the liquid specimen is neither dispersed all over the circular area of the liquid specimen, nor flocculated and concentrated at one point, but the trace element (a component to be analyzed) is dotted like islands in the ocean on the organic thin film: thus the liquid specimen has not been able to be concentrated so as to enable sensitivity analysis for a trace element.

A liquid specimen precipitates as crystals on a film in the course of concentration by evaporation of a solvent, which occurs according to a kind of a specimen, and the crystals work as obstacles hindering uniform reduction in the circular outer periphery accompanied by evaporation of the water droplet of the liquid specimen, hindering concentration of the liquid specimen.

US-A-5 958 345 discloses a method and apparatus for concentrating a liquid specimen for use in X-ray fluorescence analysis in which the liquid specimen is dropped onto a hydrophobic surface provided with hydrophilic anchors in order to fix the hydrophilic droplets.

US 5 544 218 discloses a thin film sample support for use with an analysis instrument relying on a beam of radiation or accelerated particles and a method for making the same. The support includes a frame with one or more orifices covered by a thin polymer film. An aqueous sample droplet is placed upon the thin film to retain a nearly spherical shape as it dries.

The present invention has been made in light of the above problem and it is an object of the present invention to enable a high sensitivity analysis for a trace element contained in a liquid specimen.

This object is met by a concentration method for a liquid specimen used in an element analyzer according to claim 1, a fluorescent X-ray analysis method using a holding tool for concentrating the liquid specimen according to claim 2 and a laser ablation/inductively coupled plasma mass spectrometry using a holding tool for concentrating the liquid specimen according to claim 3.

Herein described in aspect 1 is a concentration method for a liquid specimen in which in concentration of the liquid specimen used in an element analyzer having an irradiation source with energy of 1.24 eV or higher, the liquid specimen is dropped onto a thin film of a water-repellent resin or an organic thin film coated with a water-repellent material, followed by concentration of the liquid specimen by evaporation of a solvent.

As the thin film of a water-repellent resin, employed is a thin film of a fluorine-based resin, a silicone-based resin or the like and a small thickness thereof is more preferable. As the organic thin film, employed is, for example, a thin film of a PET film of a thickness of 5 µm or less or the like and as the water-repellent material used in coating, employed is a fluorine-based resin; a silicone-based resin or the like.

According to the invention described in aspect 1, wherein liquid paraffin or a surfactant is added to the liquid specimen, which is then dropped. A holding tool for concentrating the liquid specimen used in the concentration method according to the invention is constructed with the thin film of a water-repellent resin or the organic thin film coated with the water-repellent material and a supporting member supporting the thin film in a state being stretched over an opening thereof.

Herein described in aspect 2 is a fluorescent X-ray analysis method using the holding tool for concentrating the liquid specimen described above, wherein the liquid specimen is dropped onto the thin film of a water-repellent resin or the organic thin film coated with a water-repellent material of the holding tool for concentrating the liquid specimen, the liquid specimen is concentrated by evaporation of the solvent, and the concentrated specimen is irradiated with X-rays to measure fluorescent X-rays liberated from the specimen and to thereby analyze a trace element contained in the specimen, wherein liquid paraffin or a surfactant is added to the liquid specimen, which is then dropped.

Herein described in aspect 3 is a laser ablation/inductively coupled plasma mass spectrometry using the holding tool for concentrating the liquid specimen as described above, wherein the liquid specimen is dropped onto the thin film of a water-repellent resin or the organic thin film coated with a water-repellent material of the holding tool for concentrating the liquid specimen, the liquid specimen is concentrated by evaporation of the solvent, and the concentrated specimen is irradiated with a laser beam to measure a gas component evaporated from the specimen and to thereby analyze a trace element contained in the specimen, wherein liquid paraffin or a surfactant is added to the liquid specimen, which is then dropped.

According to aspect 1, when the liquid specimen is dropped onto the thin film of a water-repellent resin or the organic thin film coated with a water-repellent material, the liquid specimen forms a thick water droplet on the surface of a film high in wafer-repellency by the action of a surface tension and the thick water droplet gradually decreases a diameter thereof by evaporation of a solvent to thereby flocculate and concentrate a trace element (a component to be analyzed) contained in the liquid specimen into one point. Therefore, at the final stage, the condensed specimen is obtained with a small spread but a large density (in other words, high in concentration), which enables a high sensitivity analysis of a trace element contained in the liquid specimen to be conducted.

Even if a liquid specimen produces crystals with ease in the course of concentration caused by evaporation of a solvent, liquid paraffin or a surfactant surrounds pieces of a material that crystallizes with ease to thereby disperse the pieces of a material in the liquid specimen; therefore, the crystals do not precipitate on the surface of a film till the last stage and no disturbance, to be otherwise caused by the crystals, affects uniform reduction of a diameter of the water droplet caused by evaporation of a solvent (concentration of the liquid specimen). Though the liquid paraffin or the surfactant remains at the last stage, atomic components of the liquid paraffin or the surfactant are hydrogen, carbon, oxygen and the like, which has no adverse influence on analysis of a trace element. Therefore, it is possible to conduct a high sensitivity analysis of a trace element contained in a liquid specimen that would be easy to form crystals accompanied by concentration caused by evaporation of a solvent.

The thin film of a water-repellent resin or the organic thin film coated with a water-repellent material is supported in a tense state over the opening of a support member, which can facilitate a series of operations from dropping of the liquid specimen to concentration by evaporation of a solvent (execution of a concentration method according to the invention of aspect 1 or 2) and thus obtained condensed specimen as it is or together with a holding tool for concentrating a liquid specimen can also be loaded in an element analyzer with an X-ray or a laser as an irradiation source.

Since the liquid specimen containing a trace element concentrating the liquid specimen is concentrated for analysis, a sufficient sensitivity is obtained despite an analysis on a liquid specimen containing a trace element and scattering of X-rays caused by a film thickness (an influence of the background due to scattered X-rays) is diminished, thereby enabling a high sensitivity analysis of a trace element to be realized.

According to aspect 3, the liquid specimen containing a trace element is condensed, the condensed specimen is irradiated with a laser beam and, then, the specimen is evaporated. Consequently, although the liquid specimen contains the trace element, a concentration of a gas component evaporated from the specimen becomes high, so that a high sensitivity analysis of a trace element can be realized.

### BRIEF DESCRIPTION OF THE DRAWINGS

Fig. 1 is a partially cutaway perspective view of a holding tool for concentration showing an embodiment of the present invention;
Fig. 2 is a schematically enlarged sectional view of a main part;
Fig. 3 is a perspective view of a holding tool for concentration showing another embodiment;
Figs. 4 is a descriptive view of a concentration method for a liquid specimen and a trace element analysis method;
Figs. 5 is a descriptive view of a concentration method for a liquid crystal specimen easy to be crystallized; and
Figs. 6(A) and 6(B) are descriptive view of an element analysis method on a liquid specimen with a conventional fluorescent X-ray analysis method.

### DETAILED DESCRIPTION OF THE PREFERRED EMBODIMENTS

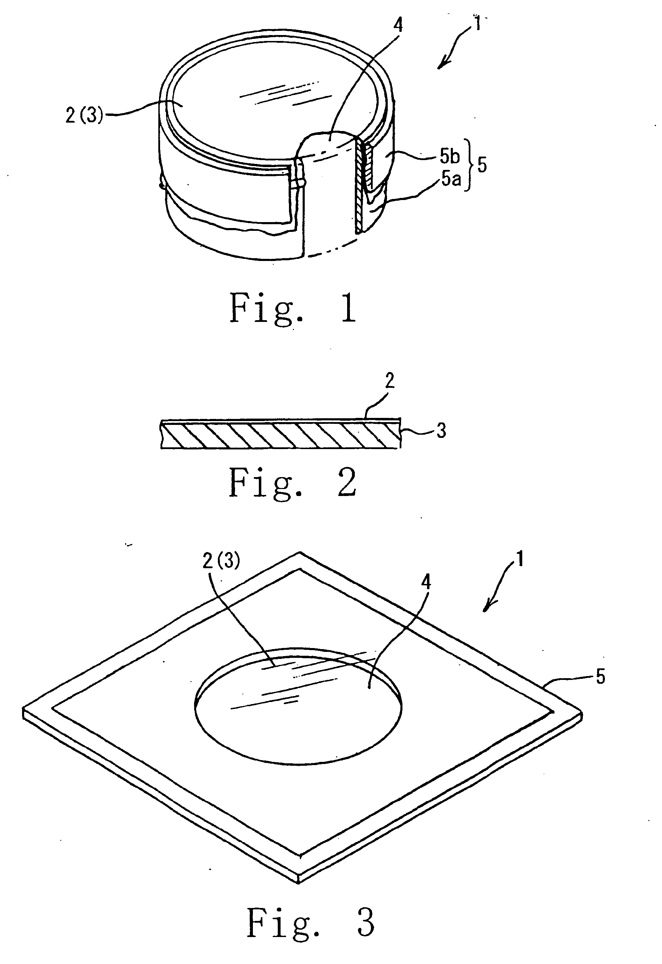

Figs. 1 and 2 shows an example of a holding tool 1 for concentrating a liquid specimen used in a concentration method for a liquid specimen containing a trace element according to the present invention. The holding tool 1 for concentrating a liquid specimen is constructed with: an organic thin film 3 coated with a water-repellent material 2; and a supporting member 5 for supporting the organic thin film 3 in a state being stretched over an opening 4, wherein the supporting member 5 is constituted of an inner ring 5a and an outer ring 5b, and puts the outer peripheral portion of the thin film therebetween to thereby support the thin film in a tense state.

As the organic thin film 3, employed is, for example, a PET film, a Nylon-based film or the like of a thickness of 5 *µ* m or less. As the water-repellent material 2, employed is a fluorine-based resin or a silicone-based resin and a water-repellent film thinner than the organic thin film 3 is formed on the organic thin film 3 therewith.

Fig. 3 shows another example of the holding tool 1 for concentrating a liquid specimen according to the present invention. The holding tool 1 for concentrating a liquid specimen is characterized by that the organic thin film 3 coated with the water-repellent material 2 is stretched over the supporting member 5 in the shape of a flat plate having the opening 4 so as to cover the opening 4. The other parts of a construction are the same as in the embodiment shown in Figs. 1 and 2.

Note that there are two ways of coating the water-repellent material 2 on the organic thin film 3, in one case of which the organic thin film 3 is coated with before being stretching over the supporting member 5 and in the other case of which coating is applied after the organic thin film 3 is stretched over the supporting member 5. In any of the embodiments shown in Figs. 1 and 3, a water-repellent material 2 is coated on one surface of an organic thin film 3 as shown in Fig. 2, while coating may be applied on both surfaces of the organic thin film 3 with the water-repellent material 2 and thereby the organic thin film 3 may be used regardless of the front surface or rear surface. A thin film of a water-repellent resin is employed instead of an.organic thin film 3 coated with a water-repellent material 2, and a holding tool 1 for concentrating a liquid specimen 1 may be constructed with the thin film of a water-repellent resin and the supporting member 5 for supporting the thin film in a state being stretched over the opening 4. In this case, as the thin film of a water-repellent resin, employed is a thin film made of a fluorine-based resin or a silicone-based resin, wherein a film thickness is preferably small in order to reduce scattering of X-rays caused by a film thickness (an influence of the background caused by scattered X-rays).

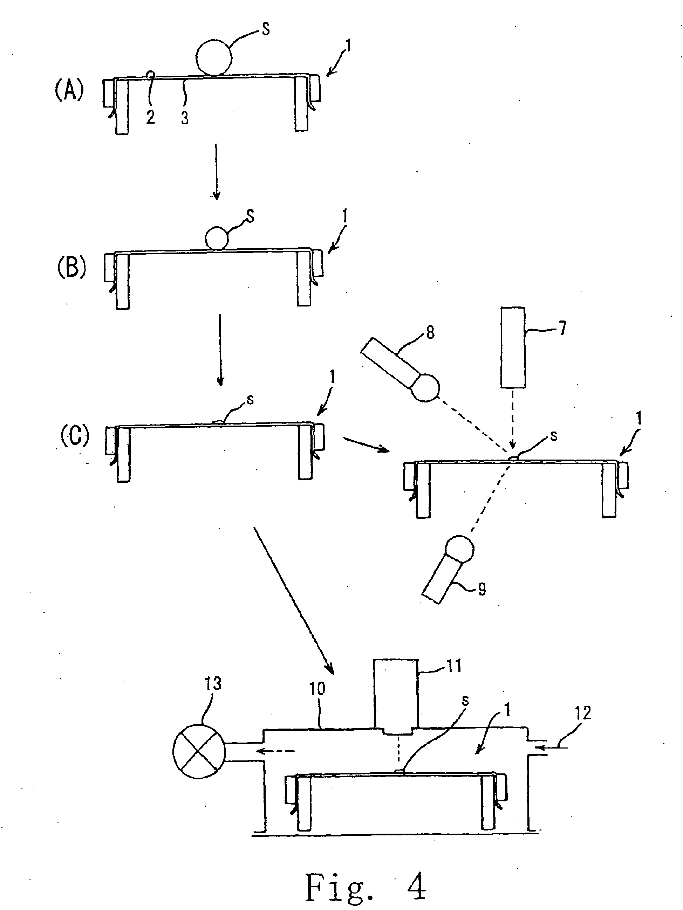

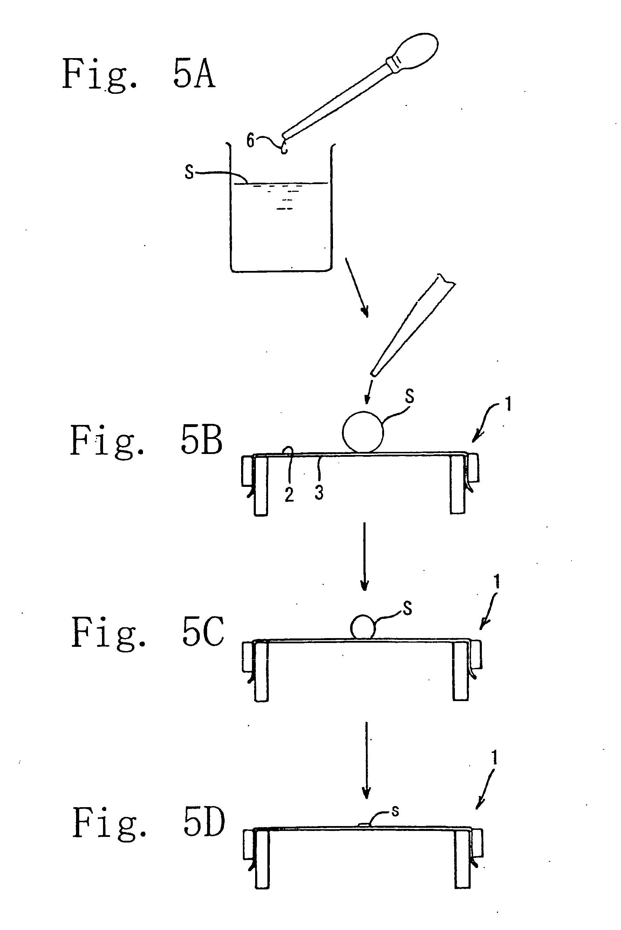

Then, description will be given of a method for concentrating a liquid specimen containing a trace element according to the present invention based on Figs. 4 and 5.

In concentration of a liquid specimen containing a trace element, the holding tool 1 for concentrating a liquid specimen shown in Fig. 1 (or Fig. 3) is used and when a liquid specimen S is dropped on a thin film of a water-repellent resin or an organic thin film 3 coated with a water-repellent material 2, the liquid specimen S forms a thick water droplet on a surface of the film high in water-repellency by the action of a surface tension as shown in Fig. 4(A).

The water droplet, as shown in Figs. 4(B) and 4(C), gradually decreases a diameter as a solvent is evaporated to thereby flocculate and concentrate a trace element (a component to be analyzed) contained in a liquid specimen S into one point and to then obtain, at the final stage, the condensed specimen s with a small spread but a large density (in other words, high in concentration).

In a case of a liquid specimen S easy to be crystallized in the course of evaporation of a solvent, a trace (for example, so as to be a concentration of the order of 100 ppm) of a surfactant 6 is, as shown in Fig. 5(A), added to the liquid specimen S in advance, thereafter the liquid specimen S is, as shown in Fig. 5(B), dropped onto a thin film of a water-repellent resin or an organic thin film 3 coated with a water-repellent material 2 and the liquid specimen S then forms a thick water droplet, as shown in Fig. 5(B), by the action of a surface tension on a surface of a film high in water-repellency.

Then, the water droplet, as shown in Figs. 5(C) and 5(D), gradually reduces a diameter as a solvent evaporates (concentration), the surfactant 6 surrounds pieces of a material easy to be crystallized and disperses the pieces of a material in the liquid specimen S, which disables the material to be crystallized on the surface of a film till the last stage, so that no crystal hinders uniform reduction in diameter of the droplet in the course of evaporation of the solvent, and a trace element is flocculated and concentrated into one point, whereby enabling a condensed specimen s small in spread but large in thickness (in other words, high in concentration) to be obtained at the last stage. Though the surfactant 6 remains on the surface of a thin film until the last stage, atomic components of the surfactant 6 includes hydrogen, carbon, oxygen and the like, which does not affect an analysis of a trace element adversely.

As the surfactant 6, used is polyethylene glycol mono-p-isooctylphenyl ether, sorbitan mono-oleate or the like. The same effect can be obtained even when liquid paraffin 6 is added instead of a surfactant 6, since liquid paraffin 6 surrounds pieces of a material easy to be crystallized to disperse the material into liquid specimen S.

The condensed specimen s obtained according to the above method is loaded together with the holding tool 1 for concentrating a liquid specimen in an element analyzer with an X-ray tube or a laser as an irradiation source for an analysis of a trace element. For example, in a case of a fluorescent X-ray analysis method, the condensed specimen s held on the surface of a film of the holding tool 1 for concentrating a liquid specimen is, as shown in Fig. 4(C), irradiated with X-rays emitted from the X-ray generating tube 7 to measure fluorescent X-rays liberated from the condensed specimen s with an upper surface X-ray detector 8 or a lower surface X-ray detector 9 and to analyze a trace element contained in the specimen.

In such a way, since a liquid specimen S containing a trace element is concentrated and analyzed, a sufficient sensitivity can be obtained even on the liquid specimen S containing the trace element and scattering of X-rays caused by a film thickness (an influence of the background by scattered X-ray) is diminished, thereby enabling a high sensitivity analysis of the trace element to be achieved.

In a case of a laser ablation/inductively coupled plasma mass spectrometry, the condensed specimen s together with the holding tool 1 for concentrating a liquid specimen is, as shown in Fig. 4(C), loaded into an ablation cell 10, the condensed specimen s held on the surface of a film of the holding tool 1 for concentrating a liquid specimen is irradiated with laser beam from a laser beam generator 11 and a gas component evaporated from the condensed specimen s is sent to the detector 13 by a stream of a carrier gas (argon) 12 to analyze a trace element contained in the specimen.

In such a way, since a liquid specimen S containing a trace element is concentrated and the concentrated specimen is irradiated with a laser beam to evaporate the specimen, a concentration of a gas component evaporated from the specimen is high despite applying an analysis on the liquid specimen S containing the trace element, thereby enabling a high sensitivity analysis of the trace element to be achieved.

## Claims

1. A concentration method for a liquid specimen used in an element analyzer having an irradiation source with energy of 1.24 eV or higher wherein the liquid specimen (S) is dropped onto a thin film of a water-repellent resin (2) or an organic thin film (3) coated with a water-repellent material (2), to thereby form a droplet on said film having high water-repellency, followed by concentration of the liquid specimen by evaporation of a solvent, **characterized in that**
liquid paraffin or a surfactant (6) is added to the liquid specimen, which is then dropped.

2. A fluorescent X-ray analysis method using a holding tool for concentrating the liquid specimen, the holding tool comprising a thin film of a water-repellent resin (2) or an organic film (3) coated with a water-repellent material (2) and a supporting member (5) supporting the thin film in a state being stretched over an opening thereof,
wherein the liquid specimen (S) is dropped onto the thin film of a water-repellent resin or the organic thin film coated with a water-repellent material of the holding tool for concentrating the liquid specimen, to thereby form a droplet on said film having high water-repellency, the liquid specimen (S) is concentrated by evaporation of the solvent, and the concentrated specimen is irradiated with X-rays to measure fluorescent X-rays liberated from the specimen and to thereby analyze a trace element contained in the specimen, **characterized in that** liquid paraffin or a surfactant (6) is added to the liquid specimen, which is then dropped.

3. A laser ablation/inductively coupled plasma mass spectrometry using a holding tool for concentrating the liquid the holding tool comprising a thin film of a water-repellent resin (2) or an organic film (3) coated with a water-repellent material (2) and a supporting member (5) supporting the thin film in a state being stretched over an opening thereof,
wherein the liquid specimen (S) is dropped onto the thin film of a water-repellent resin (2) or the organic thin film (3) coated with a water-repellent material (2) of the holding tool for concentrating the liquid specimen, to thereby form a droplet on said film having high water-repellency, the liquid specimen (S) is concentrated by evaporation of the solvent, and the concentrated specimen is irradiated with a laser beam to measure a gas component evaporated from the specimen and to thereby analyze a trace element contained in the specimen, **characterized in that**
liquid paraffin or a surfactant (6) is added to the liquid specimen, which is then dropped.

## Patentansprüche

1. Verfahren zur Konzentration einer flüssigen Probe, verwendet in einem Elementanalysator mit einer Strahlungsquelle mit einer Energie von 1,24 eV oder höher, wobei die flüssige Probe (S) auf einen dünnen Film eines wasserabweisenden Harzes (2) oder eines organischen dünnen Films (3), beschichtet mit einem wasserabweisenden Material (2), getropft wird, um **dadurch** einen Tropfen auf dem Film mit hoher Wasserabweisung zu bilden, gefolgt von der Konzentration der flüssigen Probe durch Abdampfen eines Lösungsmittels, **dadurch gekennzeichnet, dass**
flüssiges Paraffin oder ein oberflächenaktives Mittel (6) zu der flüssigen Probe, die dann getropft wird, zugegeben wird.

2. Fluoreszenz-Röntgenstrahlen-Analyseverfahren unter Verwendung eines Haltewerkzeugs zur Konzentration der flüssigen Probe, wobei das Haltewerkzeug einen dünnen Film eines wasserabweisenden Harzes (2) oder einen organischen Film (3), beschichtet mit einem wasserabweisenden Material (2), und ein Trägerbauteil (5), das den dünnen Film in einem Zustand hält, in dem er über eine Öffnung hiervon gespannt ist, umfasst,
wobei die flüssige Probe (S) auf den dünnen Film eines wasserabweisenden Harzes oder den organischen dünnen Film, der mit einem wasserabweisenden Material beschichtet ist, des Haltewerkzeugs getropft wird, um die flüssige Probe zu konzentrieren, um **dadurch** einen Tropfen auf dem Film mit hoher Wasserabweisung zu bilden, wobei die flüssige Probe (S) durch Abdampfen des Lösungsmittels konzentriert wird, und die konzentrierte Probe mit Röntgenstrahlen bestrahlt wird, um FluoreszenzRöntgenstrahlen, die von der Probe freigesetzt werden, zu messen und **dadurch** ein Spurenelement, das in der Probe enthalten ist, zu bestimmen, **dadurch gekennzeichnet, dass**
flüssiges Paraffin oder ein oberflächenaktives Mittel (6) zu der flüssigen Probe, die dann getropft wird, zugegeben wird.

3. Laserabtragungs/induktiv gekoppeltes Plasmamassenspektrometer unter Verwendung eines Haltewerkzeugs zur Konzentration der Flüssigkeit, wobei das Haltewerkzeug einen dünnen Film eines wasserabweisenden Harzes (2) oder einen organischen Film (3), beschichtet mit einem wasserabweisenden Material (2), und ein Trägerbauteil (5), das den dünnen Film in einem Zustand hält, in dem er über eine Öffnung hiervon gespannt ist, umfasst,
wobei die flüssige Probe (S) auf den dünnen Film eines wasserabweisenden Harzes (2) oder den organischen dünnen Film (3), der mit einem wasserabweisenden Material (2) beschichtet ist, des Haltewerkzeugs getropft wird, um die flüssige Probe zu konzentrieren, um **dadurch** einen Tropfen auf dem Film mit hoher Wasserabweisung zu bilden, wobei die flüssige Probe (S) durch Abdampfen des Lösungsmittels konzentriert wird, und die konzentrierte Probe mit einem Laserstrahl bestrahlt wird, um eine Gaskomponente, die aus der Probe freigesetzt wird, zu messen und **dadurch** ein Spurenelement, das in der Probe enthalten ist, zu bestimmen, **dadurch gekennzeichnet, dass**
flüssiges Paraffin oder ein oberflächenaktives Mittel (6) zu der flüssigen Probe, die dann getropft wird, zugegeben wird.

## Revendications

1. Méthode de concentration pour un échantillon liquide utilisée dans un analyseur d'éléments comportant une source de rayonnement dotée d'une énergie de 1,24 eV ou plus, dans laquelle l'échantillon liquide (S) est versé goutte à goutte sur un film mince formé d'une résine hydrophobe (2) ou sur un film mince organique (3) revêtu d'une matière hydrophobe (2) pour ainsi former une gouttelette sur ledit film présentant une forte hydrophobie, étape qui est suivie par la concentration de l'échantillon liquide par évaporation d'un solvant, **caractérisée en ce que**
de la paraffine liquide ou un agent tensioactif (6) est ajouté à l'échantillon liquide qui est ensuite versé goutte à goutte.

2. Méthode d'analyse par fluorescence de rayons X utilisant un outil de support pour concentrer l'échantillon liquide, l'outil de support comprenant un film mince formé d'une résine hydrophobe (2) ou un film organique (3) revêtu d'une matière hydrophobe (2), et un organe de support (5) supportant le film mince dans un état dans lequel ce dernier est tendu sur son ouverture,
dans laquelle l'échantillon liquide (S) est versé goutte à goutte sur le film mince formé d'une résine hydrophobe ou sur le film mince organique revêtu d'une matière hydrophobe de l'outil de support afin d'être concentré, pour ainsi former une gouttelette sur ledit film présentant une forte hydrophobie, dans laquelle l'échantillon liquide (S) est concentré par évaporation du solvant, et dans laquelle l'échantillon concentré est exposé aux rayons X pour mesurer les rayons X fluorescents libérés par l'échantillon et analyser ainsi un élément à l'état de trace contenu dans l'échantillon, **caractérisée en ce que**
de la paraffine liquide ou un agent tensioactif (6) est ajouté à l'échantillon liquide qui est ensuite versé goutte à goutte.

3. Spectrométrie de masse couplée à un plasma inductif/ablation laser utilisant un outil de support pour concentrer le liquide, l'outil de support comprenant un film mince formé d'une résine hydrophobe (2) ou un film organique (3) revêtu d'une matière hydrophobe (2), et un organe de support (5) supportant le film mince dans un état dans lequel ce dernier est tendu sur son ouverture,
dans laquelle l'échantillon liquide (S) est versé goutte à goutte sur le film mince formé d'une résine hydrophobe (2) ou sur le film mince organique (3) revêtu d'une matière hydrophobe (2) de l'outil de support afin d'être concentré, pour ainsi former une gouttelette sur ledit film présentant une forte hydrophobie, dans laquelle l'échantillon liquide (S) est concentré par évaporation du solvant, et dans laquelle l'échantillon concentré est exposé à un faisceau laser pour mesurer un composant gazeux libéré par évaporation par l'échantillon et analyser ainsi un élément à l'état de trace contenu dans l'échantillon, **caractérisée en ce que**
de la paraffine liquide ou un agent tensioactif (6) est ajouté à l'échantillon liquide qui est ensuite versé goutte à goutte.
